Europäisches Patentamt

European Patent Office

Office européen des brevets

(11) Veröffentlichungsnummer: **0 501 038 A1**

# EUROPÄISCHE PATENTANMELDUNG

(21) Anmeldenummer: **91122097.8**

(22) Anmeldetag: **23.12.91**

(51) Int. Cl.5: **F02K 9/95, F42B 3/113**

(30) Priorität: **28.02.91 DE 4106243**

(43) Veröffentlichungstag der Anmeldung:
**02.09.92 Patentblatt 92/36**

(84) Benannte Vertragsstaaten:
**AT BE CH DK ES FR GB GR IT LI LU NL SE**

(71) Anmelder: **ERNO Raumfahrttechnik
Gesellschaft mit beschränkter Haftung
Hünefeldstrasse 1-5
W-2800 Bremen 1(DE)**

(72) Erfinder: **Hanraths, Thomas
Graf Moltke Strasse 4
W-2800 Bremen 1(DE)**
Erfinder: **Oehler, Winfried
Grüne Strasse 47 a
W-2870 Delmenhorst(DE)**
Erfinder: **Bremer, Klaus
Wörpedorferstrasse 49
W-2801 Grasberg(DE)**

(54) **Zündsystem für pyrotechnische Antriebsmittel.**

(57) Es wird ein Zündsystem für pyrotechnische Antriebsmittel vorgeschlagen, das einen Energie emittierenden Initiator aufweist. Der Initiator ist über eine Übertragungsstrecke mit einem Zünder verbunden und der Zünder ist zur Beaufschlagung des Antriebsmittels vorgesehen. Die Übertragungsstrecke ist als ein Laserstrahlung übertragender Lichtwellenleiter ausgebildet, der im Bereich seines dem Zünder abgewandten Endes optisch mit dem Initiator gekoppelt ist.

Fig.1

Rank Xerox (UK) Business Services

Die Erfindung betrifft ein Zündsystem für pyrotechnische Antriebsmittel, bei dem von einem Initiator emittierte optische Energie über eine Übertragungsstrecke in den Bereich eines Zünders geleitet wird und bei dem der Zünder zur Beaufschlagung des Antriebsmittels vorgesehen ist.

Derartige Zündsysteme werden im Bereich von Satellitenantrieben sowie im Bereich von Trägersystemen für die Luft- und Raumfahrt verwendet. Die bekannten Zündsysteme weisen jedoch nicht für alle Anwendungsfälle die in diesem Bereich geforderte extrem hohe Zuverlässigkeit auf. Bei einem Ausfall des Zündsystems wird beispielsweise ein Satellit manövrierunfähig oder bei einem Trägeraggregat können Antriebsvorrichtungen nicht gezündet werden, so daß ein Absturz des Trägers unvermeidlich ist. Aufgrund der sehr hohen Kosten von Satelliten und Trägersystemen wird deshalb eine gegenüber einer Vielzahl anderer technischer Bereiche wesentliche höhere Zuverlässigkeit gefordert.

Aufgabe der vorliegenden Erfindung ist es, ein Zündsystem der einleitend genannten Art zu verbessern, um die Zuverlässigkeit zu erhöhen.

Diese Aufgabe wird erfindungsgemäß dadurch gelöst, daß die Übertragungsstrecke als ein Laserstrahlen übertragender Lichtwellenleiter ausgebildet ist, der im Bereich seines dem Zünder abgewandten Endes optisch mit dem Initiator gekoppelt ist.

Durch den Einsatz des Lichtwellenleiters als Energieübertragungsstrecke erfolgt eine vollkommene galvanische Entkopplung des Initiators und des Zünders. Darüber hinaus ist die Übertragungsstrecke durch elektromagnetische Strahlung nicht störbar. Da aber gerade elektromagnetische Strahlung im Bereich der Luft- und Raumfahrt eine wesentliche Störquelle darstellt, kann ein entscheidender Störfaktor durch diese Konstruktion eliminiert werden. Mit Hilfe der Laserstrahlung ist es darüber hinaus möglich, eine hohe Energiedichte zu übertragen , die eine zuverlässige Auslösung des Zünders gewährleistet. Die optische Verkopplung des Lichtwellenleiters mit dem Initiator ermöglicht eine verlustarme Einleitung der Energie der Laserstrahlung in den Lichtweltenleiter und damit eine Übertragung der Energie in den Bereich des Zünders.

Aufgrund dieser hohen Zuverlässigkeit eignet sich das erfindungsgemäße Zündsystem zum Ersatz der nach dem Stand der Technik bekannten elektrischen Zündsysteme, bei denen im Bereich des Initiators ein elektrischer Strom generiert wird, der über ein Verbindungskabel in den Bereich des Zünders geleitet wird und dort eine thermische Erwärmung hervorruft, die zu einer Auslösung des Zünders führt.

Zur Vergrößerung der Flexibilität bezüglich von Einbaumöglichkeiten des Zündsystems und zur Verifikation der optischen Übertragungsstrecke wird vorgeschlagen, daß im Bereich des Lichtwellenleiters eine Kupplung angeordnet ist.

Es wird vorgeschlagen, daß im Bereich des Initiators eine Impuls-Laserdiode angeordnet ist. Eine geeignete Ansteuerung der Impuls-Laserdiode kann dadurch erzielt werde, daß die Impuls-Laserdiode von einem elektronischen Schalter angesteuert ist.

Für einen optimalen Betrieb wird vorgeschlagen, daß ein Impuls von etwa 200 Nanosekunden vorgesehen ist. Darüber hinaus ist es zweckmäßig, daß eine maximale Leistungsabgabe von etwa 5 Watt vorgesehen ist.

Eine andere Variante zur Realisierung des Initiators besteht darin, daß im Bereich des Initiators eine für einen Dauerbetrieb geeignete Laserdiode angeordnet ist. Die für einen ordnungsgemäßen Betrieb dieser Laserdiode erforderliche Koordinierung erfolgt dadurch, daß die Laserdiode von einer Regelung beaufschlagt ist. Durch die Verwendung einer derartigen Laserdiode ist es möglich, daß eine maximale Leistungsabgabe von etwa 300 mW vorgesehen ist.

Ausführungsbeispiele der Erfindung sind in den Zeichnungen schematisch dargestellt. Es zeigen:

Fig. 1    ein Blockschaltbild eines Zündsystems, bei dem eine Impuls-Laserdiode über einen Lichtwellenleiter mit dem Zünder verbunden ist **und**

Fig. 2    ein Blockschaltbild eines Zündsystems, bei dem eine für einen Dauerbetrieb geeignete Laserdiode über einen Lichtwellenleiter mit dem Zünder verbunden ist.

Ein Zündsystem für ein pyrotechnisches Antriebsmittel besteht im wesentlichen aus einem Initiator (1), der durch eine Übertragungsstrecke (2) mit einem Zünder (3) verbunden ist.

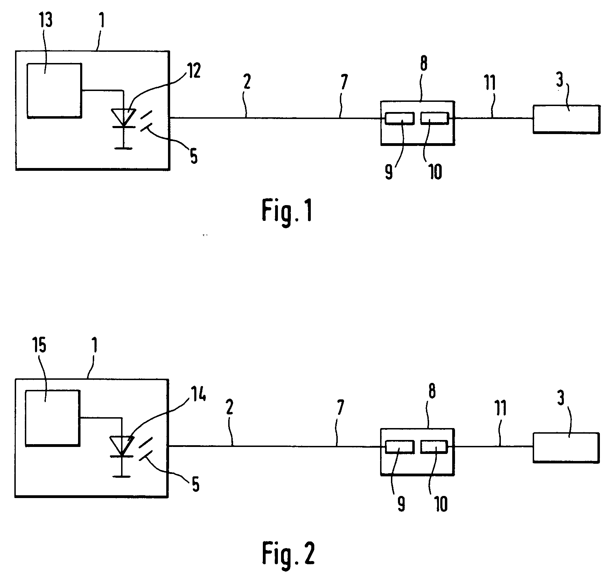

Gemäß der Ausführungsform nach Figur 2 erstreckt sich der Lichtwellenleiter (7) zwischen dem gesamten Bereich der Kupplung (8) und des Initiators (1). Im Bereich des Initiators (1) ist eine Impuls-Laserdiode (12) angeordnet, die von einem elektronischen Schalter (13) angesteuert ist. Der Schalter (13) ist zur Durchführung einer hohen Schaltfrequenz ausgelegt. Insbesondere ist es möglich, eine Zeitkonstante von etwa 200 Nanosekunden zu realisieren. Eine Energieabgabe bis zu etwa 5 Watt ist ausreichend.

Gemäß der Ausführungsform nach Figur 3 ist im Bereich des Initiators (1) eine für einen Dauerbetrieb geeignete Laserdiode (14) angeordnet. Die Laserdiode (14) wird von einer Neuerung (15) beaufschlagt. Eine zweckmäßige Auslegung ermöglicht eine Leistungsabgabe bis zu etwa 300 mW.

Bei den Ausführungsformen gemäß Figur 2 und 3 ist es möglich, eine sehr kompakte Ausbildung des Initiators (1) zu realisieren. Trotz dieser kompakten Ausführungsform ist eine gesicherte Detonationsauslösung gewährleistet.

**Patentansprüche**

1. Zündsystem für pyrotechnische Antriebsmittel, bei dem von einem Initiator emittierte Energie über eine Übertragungsstrecke in den Bereich eines Zünders geleitet wird und bei dem der Zünder zur Beaufschlagung des Antriebsmittels vorgesehen ist, dadurch gekennzeichnet, daß die Übertragungsstrecke (2) als ein Laserstrahlen (5) übertragender Lichtwellenleiter (7) ausgebildet ist, der im Bereich seines dem Zünder (3) abgewandten Endes optisch mit dem Initiator (1) gekoppelt ist.

2. Zündsystem nach Anspruch 1, dadurch gekennzeichnet, daß im Bereich des Lichtwellenleiters (7) eine Kupplung (8) angeordnet ist.

3. Zündsystem nach Anspruch 1 oder 2, dadurch gekennzeichnet, daß im Bereich des Initiators (1) eine Impuls-Laserdiode (12) angeordnet ist.

4. Zündsystem nach Anspruch 3, dadurch gekennzeichnet, daß die Impuls-Laserdiode (12) von einem elektronischem Schalter (13) angesteuert ist.

5. Zündsystem nach Anspruch 3 oder 4, dadurch gekennzeichnet, daß ein Impuls von etwa 200 Nanosekunden vorgesehen ist.

6. Zündsystem nach einem der Ansprüche 3 bis 5, dadurch gekennzeichnet, daß eine maximale Leistungsabgabe von etwa 5 Watt vorgesehen ist.

7. Zündsystem nach Anspruch 1 oder 2, dadurch gekennzeichnet, daß im Bereich des Initiators (1) eine für einen Dauerbetrieb geeignete Laserdiode (14) angeordnet ist.

8. Zündsystem nach Anspruch 7, dadurch gekennzeichnet, daß die Laserdiode (14) von einer Regelung (15) beaufschlagt ist.

9. Zündsystem nach Anspruch 7 oder 8, dadurch gekennzeichnet, daß eine maximale Leistungsabgabe von etwa 300 mW vorgesehen ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 917 014 (LOUGHRY ET AL.)<br>* Spalte 2, Zeile 64 - Spalte 3, Zeile 9 *<br>* Spalte 4, Zeile 28 - Zeile 65 *<br>* Abbildungen 1,6,7 * | 1-4,7,8 | F02K9/95<br>F42B3/113 |
| A | | 5,6,9 | |
| | --- | | |
| X | US-A-4 343 242 (WELK)<br>* Spalte 2, Zeile 13 - Spalte 3, Zeile 2; Abbildungen * | 1-4,7,8 | |
| A | | 5,6,9 | |
| | --- | | |
| X | US-A-4 391 195 (SHANN)<br>* Spalte 7, Zeile 12 - Zeile 42 *<br>* Spalte 8, Zeile 30 - Zeile 41 *<br>* Abbildungen 1,9 * | 1-4,7,8 | |
| A | | 5,6,9 | |
| | --- | | |
| A | US-A-3 296 795 (NIELSEN)<br>* Spalte 1, Zeile 43 - Zeile 55; Abbildungen * | 1 | |
| | --- | | |
| A | US-A-3 300 968 (FULLMAN)<br>* Spalte 1, Zeile 43 - Zeile 55; Abbildungen * | 1 | **RECHERCHIERTE SACHGEBIETE (Int. Cl.5)** |
| | ----- | | F02K<br>F42B |

Der vorliegende Recherchenbericht wurde für alle Patentansprüche erstellt

| Recherchenort | Abschlußdatum der Recherche | Prüfer |
|---|---|---|
| DEN HAAG | 29 MAI 1992 | OLSSON B.G. |